# EUROPEAN PATENT SPECIFICATION

(11) **EP 3 908 525 B1**
(45) Date of publication and mention of the grant of the patent: **09.04.2025**
(21) Application number: 20700033.2
(22) Date of filing: 08.01.2020
(51) Int. Cl.: B65C 3/26

(54) **MACHINE FOR TREATING AND/OR HANDLING OBJECTS, IN PARTICULAR CONTAINERS, AND RELATIVE METHOD**
MASCHINE ZUR BEHANDLUNG UND/ODER HANDHABUNG VON OBJEKTEN, INSBESONDERE VON BEHÄLTERN, UND ZUGEHÖRIGES VERFAHREN
MACHINE DE TRAITEMENT ET/OU DE MANIPULATION D'OBJETS, EN PARTICULIER DE CONTENANTS, ET PROCÉDÉ ASSOCIÉ

(30) Priority: 10.01.2019 IT 201900000361
(43) Date of publication of application: 17.11.2021
(73) Proprietor: MAKRO LABELLING S.r.l., 46044 Goito (MN) (IT)
(72) Inventor: VEZZONI, Davide, 46012 Bozzolo (Mantova) (IT); MARCANTONI, Simone, 46040 Ponti sul Mincio (Mantova) (IT); CAMPEDELLI, Davide, 46048 Roverbella (Mantova) (IT)
(74) Representative: Anselmi, Davide
(86) International application number: PCT/IB2020/050115
(87) International publication number: WO 2020/144592

(56) References cited:
- EP-A1- 3 118 131
- WO-A1-2014/102075
- WO-A1-2017/103813
- US-A1- 2015 367 555

## Description

### Technical Field

The present invention relates to a machine for treating and/or handling objects, preferably containers such as bottles.

In particular, the invention fits into the technical field of linear motors and of how these, coupled with conveyor machines, enable the treatment and handling of objects or containers along the production line. In detail, the invention relates to the mechanism used to pump or suction a pre-established amount of air towards or from a container to be treated and/or handled.

The invention further relates to a method for treating and/or handling objects, in particular containers.

### State of the art

At present, the majority of conveyor machines used to operate on containers are of the rotary carousel type. The carousel has, on the periphery thereof, predefined support stations (commonly defined by a "plate") on which the containers to be treated are positioned. In particular, the carousel has a central rotation axis and for the plates has respective rotation axes parallel to the central axis. Therefore, each plate is rotatable about itself so as to set a respective container into rotation and enable the orientation and processing thereof, such as, for example, labelling.

If empty containers having flexible walls, such as, for example, cardboard or plastic containers, have to be labelled, a pre-established amount of air is usually blown inside them to impart to the structure a rigidity such as to withstand the surface pressure applied by the labeller during the processing, which can cause breakage or permanent deformation. For this purpose, it is necessary to set the air into rotation so that it arrives at each container.

Therefore, each rotary carousel is usually equipped with a rotary air distributor capable of blowing the necessary amount of air into every container. In detail, the rotary distributor is a complex system of tubes comprising a central conduit configured so as to radially distribute a pre-established flow of air to every branch, and thus to every plate and container.

WO 2014/102075 A1 and EP 3 118 131 A1 disclose a machine for treating and/or handling containers, comprising rotary carousels for displacing the containers, and an operating element extending from the carousel towards the object to be treated and/or handled and at least in part arranged in fluid connection with pumping and/ or suction means so as to act on a specific portion of said object to be treated and/ or handled through said compressed or suctioned fluid, said operating element having an active surface shaped to be able to interact with the specific portion of the object to be treated and/or handled, in particular a mouth of the container, and having a through opening facing towards the object to be treated and/or handled so as to define a fluid connection between said pumping and/or suction means and the object to be treated and/or handled. These documents also disclose a corresponding method.

However, nowadays there is a known practice of exploiting container conveyor systems that use a linear motor structure, wherein a plate is seated on a respective mobile carriage along a guide that can have a variety of forms (usually oval) and is powered by an electric current.

It is clear that the application of a rotary distributor for distributing air to the linear motor structure, rather than to rotary carousels, has greater complexity.

In fact, on linear motor conveyors, each carriage is configured to move totally independently of the others, in reference both to reciprocal distance and speed, making difficult any connection with possible connection tubes and the alignment thereof with the openings of the main connector.

In addition, the linear motor structure, having an extension according to a variety of shapes (e.g. oval), rather than circular, would require each carriage to be connected to the rotary air distributor, where present, with extendible tubes, since every point of the oval path would have a different distance from the point of origin of the main air flow.

WO 2017/103813 A1 discloses a machine for treating and/or handling objects, in particular containers, said machine comprising a guide extending along an advancement direction of the objects; a main carriage slidably mounted on said guide so as to define together a main linear motor; at least one auxiliary carriage slidably mounted on said guide so as to define together an auxiliary linear motor; and a control unit connected to said guide and configured to manage the sliding of said main carriage and said auxiliary carriage along said guide and the reciprocal distance thereof. This document also discloses a corresponding method.

### Object of the invention

In this context, the technical task at the basis of the present invention is to propose a machine for treating and/or handling objects that overcomes the above-mentioned drawbacks of the prior art.

In particular, an object of the present invention is to provide a machine for treating and/or handling objects, in particular containers, which enables air to be pumped or suctioned at the carriages carrying the containers in a simple and effective manner.

Even more in particular, it is an object of the present invention to provide a machine for treating and/or handling objects wherein, on each carriage, for every respective container, it is possible to convey a sufficient amount of air necessary to stiffen the structure of the container during labelling operations or the like.

Another object of the present invention is to provide a machine for treating and/or handling objects wherein the conveyance of a flow of air can be used both to carry out treatments and perform handling operations on the objects present, in particular containers.

The stated technical task and the specified objects are substantially achieved by a machine for treating and/or handling objects and the relative method, which comprise the technical features disclosed in the independent claims. The dependent claims correspond to further advantageous aspects of the invention.

It should be highlighted that this summary introduces, in simplified form, a selection of concepts that will be further elaborated in the detailed description given below.

The invention relates to a machine for treating and/or handling objects, in particular containers. The machine comprises a guide extending along an advancement direction of the objects, a main carriage and an auxiliary carriage, both slidably mounted on the guide so as to define respective linear motors, and a control unit connected to the guide and configured to manage the sliding of the main carriage and the auxiliary carriage and the reciprocal distance thereof. In addition, the machine comprises a fluid pumping and/or suction member interposed between the main carriage and the auxiliary carriage so as to compress or suction a fluid as a function of the variation of the reciprocal distance between the main carriage and the auxiliary carriage. Finally, the machine comprises an operating element connected to the pumping and/or suction member which extends towards the object to be treated and/or handled so as to act on the latter by means of the compressed or suctioned fluid. In particular, the operating element extending from the main carriage towards the object to be treated and/or handled is at least in part arranged in fluid connection with the pumping and/or suction member so as to act on a specific portion of the object to be treated and/or handled through the compressed or suctioned fluid.

Advantageously, managing the reciprocal distance between the main carriage and the auxiliary carriage (increasing it, decreasing it or keeping it unvaried) enables the pumping and/or suction member to be managed and thus makes it possible to control the emission or intake of a pre-established amount of fluid by that member. In this manner, therefore, exploiting the interaction between the main carriage and the auxiliary carriage overcomes the necessity of having to install for every carriage a specific pipe indispensable for conveying the amount of fluid necessary to treat and/or handle the object being processed.

The blowing of air through the operating element by the pumping and/or suction member preferably takes place for the treatment of deformable empty containers.

The present patent application further relates a method for treating and/or handling objects, in particular containers.

### Brief description of the drawings

Additional features and advantages of the present invention will become more apparent from the approximate, and thus non-limiting, description of a preferred but non-exclusive embodiment of a machine for treating and/or handling objects, in particular containers, as illustrated in the accompanying drawings, in which:
- figure 1 illustrates, according to a front schematic view, a first preferred embodiment of the machine for treating and/or handling objects;
- figure 2 illustrates, according to a top schematic view, the machine for treating and/or handling objects;

- figure 3 illustrates, according to a schematic side view, some details of the machine for treating and/or handling objects;
- figure 4 illustrates, according to a schematic side view, a variant embodiment of the machine for treating and/or handling objects illustrated in figure 3;
- figure 5a illustrates, according to a top schematic view, a second embodiment of the machine for treating and/or handling objects;
- figure 5b illustrates, according to a top schematic view, a variant embodiment of the machine for treating and/or handling objects illustrated in figure 5a.

With reference to the drawings, they serve solely to illustrate embodiments of the invention with the aim of better clarifying, in combination with the description, the inventive principles at the basis of the invention.

### Description of at least one embodiment of the invention

The present invention relates to a machine for treating and/or handling objects, in particular containers.

With reference to the figures, a machine for treating and/or handling objects has been generically indicated with the number 1.

The other numerical references refer to technical features of the invention which, barring indications otherwise or evident structural incompatibilities, the person skilled in the art will know how to apply to all the variant embodiments described.

Any modifications or variants which, in the light of the description, are evident to the person skilled in the art, must be considered to fall within the scope of protection established by the present invention, according to considerations of technical equivalence.

A machine 1 for treating and/or handling objects, in particular containers, comprises at least one guide 2 extending along an advancement direction A of the objects, at least one main carriage 3 and at least one auxiliary carriage 4, both slidably mounted on the guide 2 so as to define respective linear motors. Advantageously, the reciprocal distance between the main carriage 3 and the auxiliary carriage 4 is variable on command.

A first preferred embodiment of the invention envisages that the machine 1 comprises a first guide (e.g. lower) for the conveyance of the object to be treated and/or handled and a second guide (e.g. upper) for the movement of the components necessary for treating and/or handling the object according to the movement of the latter.

A second embodiment of the invention, by contrast, envisages that the machine 1 comprises a single guide configured both for the movement of the object to be treated and/or handled and for the treatment and/or handling of the latter.

For example, in the case of "bottom handling", used mainly in conveyors for containers, the sliding carriages are configured to support the object to be treated and/or handled from the bottom and to carry out the pre-established processing by means of the specific components installed on the carriages themselves. The activation of the pumping means (described below) takes place by nearing/distancing the same lower carriages.

Alternatively, for example, in the case of "neck handling" by conveyors, the sliding carriages comprise the components necessary for treating and/or handling the object and which are configured to support it from the top, by the "neck", in order to move it in addition to carrying out the specific processing. The activation of the pumping means (described below) takes place by nearing/distancing the same upper carriages.

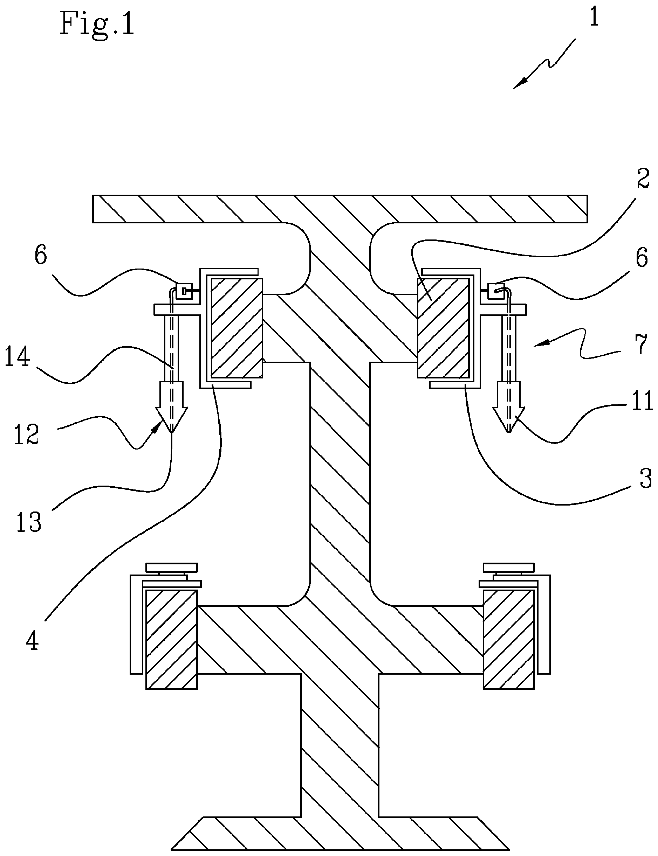

Figure 1 illustrates the first embodiment of the invention, wherein the machine 1 comprises an upper guide (the guide 2 introduced previously) and a lower guide along which a plurality of supporting carriages is slidably mounted, each of which is provided with a plate on which an object to be treated and/or handled (not illustrated), preferably a container, is positioned. The upper guide and lower guide preferably have, at least along a section for processing the containers, the same direction of extension so that a first carriage of the upper guide (the already mentioned main carriage 3) is able to follow, in a mirror-like fashion, the movement of a specific supporting carriage on the lower guide. In this manner, at every section of the guide, it is possible to enable the interaction between a functional device installed on the carriage of the upper guide and the object to be treated and/or handled, which is positioned on the supporting carriage of the lower guide.

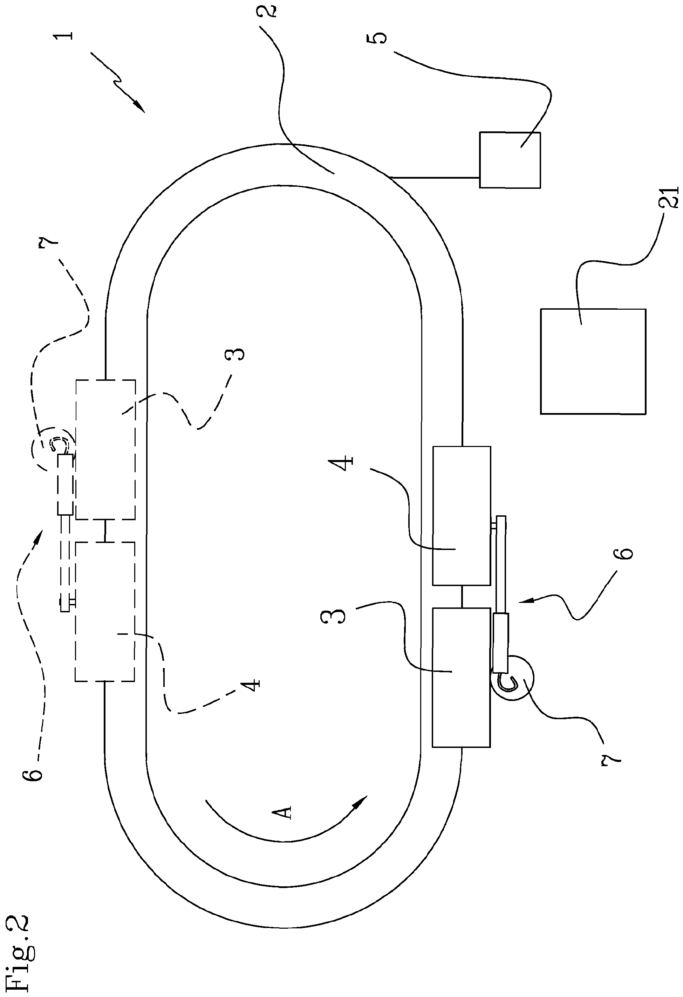

As may be better seen in figure 2, a second carriage of the upper guide (the above-mentioned auxiliary carriage 4) follows or precedes the first carriage along the upper guide moving away from or nearer to it so that an actuator, which is connected to the aforesaid functional device and positioned between the carriages of the upper guide, activates the operation of the functional device to enable the interaction with the object to be treated and/or handled positioned on the supporting carriage of the lower guide. Consequently, the variation of the distance of the auxiliary carriage relative to the main carriage activates the actuator capable of acting on the functional device. The auxiliary carriage is preferably not configured to carry or act on a further container, but is only at the service of the main carriage. In other words, the auxiliary carriage is not in turn equipped with a further functional device activated by a further actuator installed on another auxiliary carriage.

According to the present invention, the actuator is a pumping and/or suction member 6 for pumping and/or suctioning a fluid (preferably air), which is interposed between the main carriage 3 and the auxiliary carriage 4 and compresses or suctions the fluid as a function of the variation of the reciprocal distance between the main carriage 3 and the auxiliary carriage 4, whereas the functional device is an operating element 7 extending towards the object to be treated and/or handled so as to act on the latter through the compressed or suctioned fluid and is at least in part arranged in fluid connection with the pumping and/or suction member 6.

Hereinafter in the present description, reference will be made to ambient air as the preferred type of fluid used.

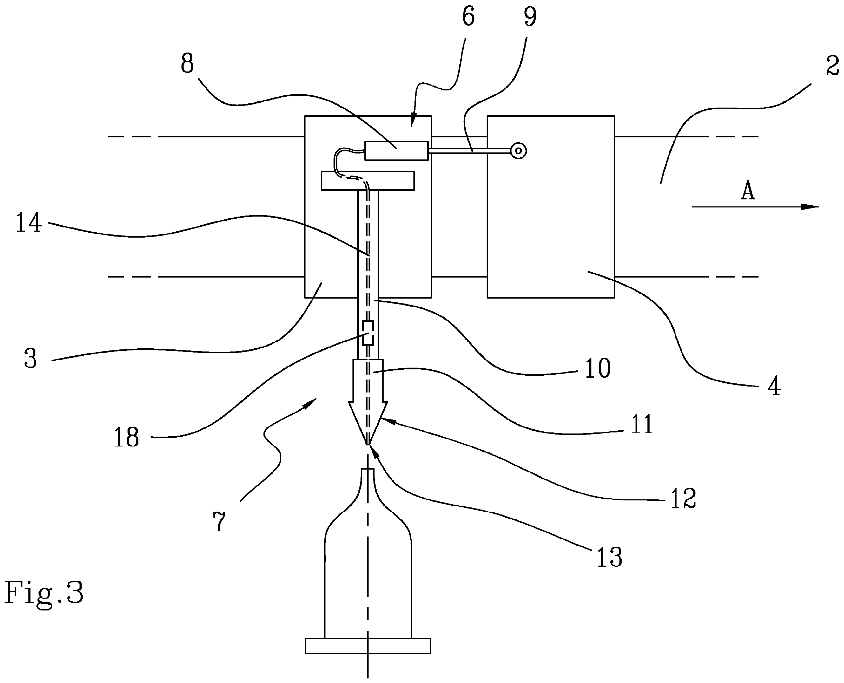

Figure 3 illustrates some details of a possible embodiment of the invention, according to which the pumping and/or suction member 6 comprises a cylinder 8 and a piston 9 inserted inside the cylinder 8 and slidable therein as a function of the variation of the reciprocal distance between the main carriage 3 and the auxiliary carriage 4.

The cylinder 8 is preferably connected to the main carriage 3, whereas the piston 9 is connected to the auxiliary carriage 4. Alternatively, it is possible to invert the aforesaid connection of the cylinder 8 and the piston 9 to the carriages or it is possible to use an equivalent device which is thus configured to transform the translational motion of nearing or distancing between the carriages into a compression or suction of air.

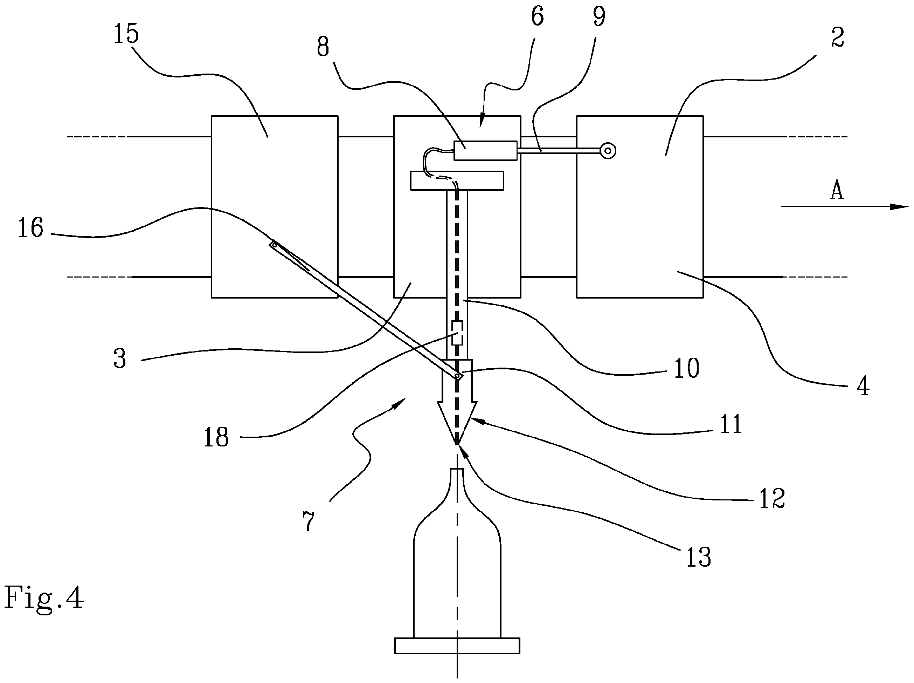

Figures 3, 4 illustrate a possible embodiment of the operating element 7, which comprises a rod-shaped body 10 extending from a shelf of the main carriage 3 along a substantially vertical direction towards a terminal 11 thereof projecting towards the object to be treated and/or handled.

The terminal 11 of the operating element 7 has an active surface 12 shaped so as to interact with a specific portion of the object to be treated and/or handled, such as, for example, a mouth of a container. In addition, the active surface 12 has a through opening 13, preferably central, facing towards the object to be treated and/or handled, and thus substantially disposed along the vertical direction, so as to define a fluid connection between the pumping and/or suction member 6 and the object to be treated and/or handled. Consequently, as may also be seen in figures 3,4, extending between the pumping and/or suction member 6 and the operating element 7 there is a conduit 14 connected to the cylinder 8 and to the through opening 13 of the terminal 11.

The operating element 7 preferably comprises a valve element (not visible in the appended figures) arranged at the through opening 13. The valve element can be configured between a condition that is free to the passage of air and an obstruction condition that obstructs the passage of the air as a function of the presence of interaction between the active surface 12 and the specific portion of the object to be treated and/or handled. In other words, when the operating element 7 enters into contact with the object to be treated and/or handled, the valve element, which is normally abutted in the obstruction condition, is configured in the condition that is free to the passage of air to enable the performance of the treatment and/or the handling of the object.

If the valve element is present, or in general in other cases, the operating element 7 comprises an accumulation area 18 such as to contain the air compressed by the pumping and/or suction member 6 when the valve element is in the condition that obstructs the passage of said fluid. The accumulation area 18 can be defined by the conduit 14 or by other conduits connected to the member 6.

In other words, in the obstruction condition the valve element enables the pumping and/or suction member 6 to compress the air before the operating element 7 interacts with the object to be treated and/or handled. In this operating condition, therefore, the main carriage 3 and the auxiliary carriage 4 reduce the reciprocal distance thereof so that the pumping and/or suction member 6 compresses the necessary amount of air in the accumulation area 18, since the valve element is in an obstruction position. Subsequently, when the operating element 7 enters into contact with the object to be treated and/or handled, the valve element is abutted in the free condition, in which it allows the passage of the compressed air towards the object to be treated and/or handled.

Preferably, independently of the presence of the accumulation area 18 and mainly as regards the blowing of air into a container, the operating element 7 or the pumping and/or suction member 6 comprises a further valve element, more precisely a non-return valve, so as to be able to carry out several consecutive pumping/suction movements in order to increase the pressure of the accumulated air. In particular, the nearing between the auxiliary carriage 4 and the main carriage 3 takes place several times so as to reach the correct level of pressure of the air to blow towards the inside of the container. In other words, thanks to the non-return valve, the piston 9 can be moved forward and backward relative to the cylinder 8 so as to blow an additional amount of air each time and consequently increase the pressure inside the initially empty container so as to impart rigidity to the normally deformable structure.

In practical terms, the nearing of the auxiliary carriage 4 to the main carriage 3 determines a first blowing of air into the container, whereas a distancing of the two carriages determines the suction of ambient air (and not air from the container) by the pumping and/or suction member 6, which is subsequently able to blow the suctioned ambient air into the container in addition to the previous air so as to increase the internal pressure thereof. Advantageously, the operating element 7 or the pumping and/or suction member 6 comprising the non-return valve can also be used in the event that the air has to be suctioned from a container (rather than compressed), so as to near/distance the carriages to/from each other several times and increase the total suction of the air from the object to be treated and/or handled.

The operating element 7 is preferably movable between a distanced interaction position, wherein the active surface 12 is arranged at a distance from the main carriage 3 and at the object to be treated and/or handled so as to act on the latter through the compressed or suctioned fluid, and a neared position, wherein the active surface 12 is arranged nearer to the main carriage 3 with respect to the distanced interaction position.

In other words, the terminal 11 and the rod-shaped body 10, solidly joined to each other, are capable of translating along the vertical direction so as to bring the terminal 11 and therefore the active surface 12 near to or at a distance from the object to be treated and/or handled.

Alternatively, only the rod-shaped body 10 is solidly joined to the main carriage 3, whereas the terminal 11 is slidable along the rod-shaped body 10 between the two aforesaid operating positions.

In both cases, the movement can be induced by a suitably shaped path (cam profile) that is present parallel to the guide 2, with which it is able to interact with at least part of the operating element 7, an appendage thereof, for example, so as to determine the vertical translation. Otherwise, the movement can be induced by an elastic element (not illustrated, for example a spring) interposed between the terminal 11 and the main carriage 3, in particular between the terminal 11 and the shelf of the main carriage 3 to which the rod-shaped body 10 is connected.

As an alternative to using an elastic element or shaped path, it is possible to install a further auxiliary carriage 15 along the guide 2, preferably in a position opposite the other auxiliary carriage 4 relative to the main carriage 3. Interposed between the main carriage 3 and the further auxiliary carriage 15 there is a connection element 16 capable of moving the operating element 7 along the vertical direction V as a function of the variation of the distance between the main carriage 3 and the further auxiliary carriage 15.

According to a first embodiment of the invention illustrated in figure 3 and figure 4, the active surface 12 is counter-shaped with respect to the mouth of the container so as to convey the air compressed by the pumping and/or suction member 6 into the latter when the operating element is abutted in the distanced interaction position.

The active surface 12 preferably has a substantially convex or conical shape so as to be at least partially inserted into the mouth of the container and prevent the compressed air inside it from leaking out before the processing has ended.

In a second aspect of the invention (not illustrated), the active surface 12 is shaped so as to abut against the portion of the object to be treated and/or handled, since the pumping and/or suction member 6 is configured to maintain the suction of air also following the passage from the distanced interaction position to the neared position.

The active surface 12 preferably has a substantially suction cup-like or concave conformation, so that the pumping and/or suction member 6 suctions the air comprised between the active surface 12 and the portion of the object against which it is abutted so as to form a negative pressure such as to join them solidly to each other. Advantageously, it is thus possible to use the operating element 7 to carry out pick-and-place operations. The object to be treated and/or handled, once joined to the operating element 7 (picking step), can subsequently be moved elsewhere in space (placing step) according to different directions of movement, such as vertical, horizontal or any combination between the two.

In the first step, the operating element 7 is in the distanced interaction position when the pumping and/or suction member 6, by suctioning air thanks to the distancing of the auxiliary carriage 4 from the main carriage 3, generates a negative pressure that forms the suction cup effect.

In the second step, by contrast, while the operating element 7 is moved into the neared position, the pumping and/or suction member 6 maintains the suction of air so as to retain the object to be treated and/or handled connected to the terminal 11. In this second step, the main carriage 3 and the auxiliary carriage 4 can keep the reciprocal distance constant so as to maintain sufficient negative pressure to prevent the detachment of the object to be treated and/or handled, or they can continue to be distanced from each other so as to induce continuous suction.

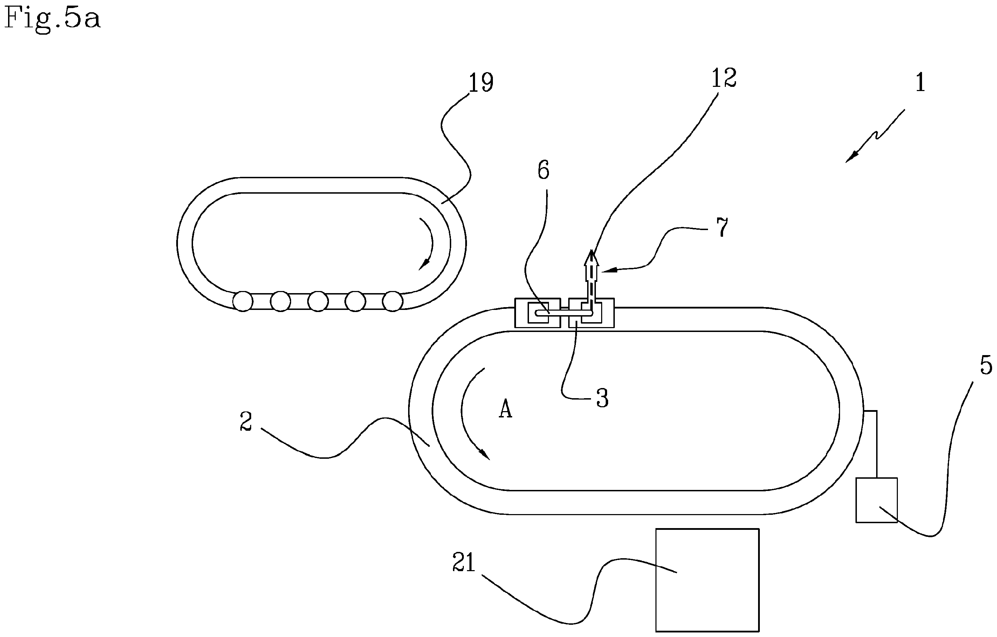

Figure 5a illustrates the second embodiment of the machine 1, wherein a sole guide 2 is present (but there could also be more than one) for the sliding of the carriages, mainly for the performance of pick-and-place operations.

For this type of operation, the machine 1 is facing towards a transfer member 19 (preferably a star wheel) for transferring the objects to be treated and/or handled, which is positioned alongside the guide 2 along which the carriages slide for processing and conveyance. Said transfer member 19 is preferably defined by a linear motor handling system.

Consequently, the operating element 7, and thus the active surface 12, are able to translate not only along a vertical direction, but also along a horizontal direction parallel to the guide 2 so as to interact with the objects to be treated and/or handled present on the transfer member 19. Advantageously, the horizontal translation can take place thanks to a cam element, rather than by means of a further auxiliary carriage 15.

Even more advantageously, if the operating element 7 comprises the valve element, the picking and placing of the object to be treated and/or handled can be managed both by moving the piston 9 following the reciprocal movement between the carriages, and by opening and closing the valve element.

In practical terms, when the operating element 7 extends horizontally to enter towards the object to be treated and/or handled so that it enters into contact with the active surface 12, the valve element is abutted in the condition that is free to the passage of the flow of air so as to determine the suction cup effect and carry out the picking operation. When the operating element 7 is horizontally retracted, by contrast, the valve element is abutted in the obstruction condition so as to maintain the suction cup effect between the active surface 12 and the object to be treated and/or handled, moving it from the transfer member 19 to the guide 2.

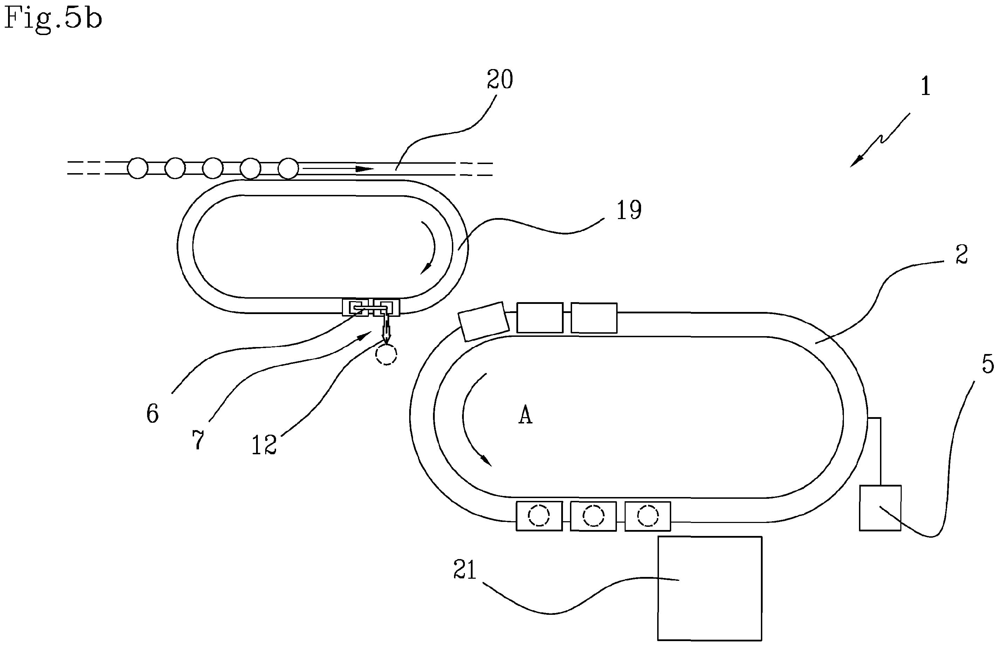

It should be noted that the operating element 7 is movable horizontally (or according to a composition of horizontal and vertical movements) with a variable stroke so as to adjust the picking distance of a container. In this regard, figure 5b illustrates a variant embodiment of the machine 1 illustrated in figure 5a, wherein the guide 2 and the carriages 3 and 4 together define the transfer member 19 (or transfer star wheel).

Figure 5b also represents a conveyor belt 20 (having a generally linear extension) configured to convey the objects to be treated and/or handled towards the transfer member 19, which is in turn configured to pick up the objects and position them on the guide 2 of the machine 1, generally a main conveyor.

The distance that exists between a container loaded on the conveyor belt 20 and the picking members of the transfer member 19 can be different from the distance that exists between a container loaded on the transfer member 19 and the main conveyor. The difference in distance can be due to the different size of the container to be treated (which may be smaller or larger).

Consequently, the variation in the horizontal movement of the operating element 7 (which may be more or less distanced from the main carriage 3) makes it possible to compensate for the aforesaid difference in distance.

In other words, the operating element 7, being movable along the horizontal direction between the distanced interaction position and the neared position, is capable of picking up and releasing the object to be treated and/or handled, compensating for the above-mentioned difference in distance, and thus extending to a greater or lesser degree according to requirements. Generally, moreover, the transfer between the transfer member 19 and the guide 2 takes place between the respective curved sections of the circuit, where it would be difficult to retain a container of a non-cylindrical shape by means, for example, of two carriages with retaining half-grippers, due to a size discrepancy.

Therefore, the picking of the operating element 7 by suction enables these problems to be solved as well, given that the retention of the container takes place by suction, not through the reciprocal nearing of the carriages. With reference to figure 5b, between the transfer member 19 and the conveyor belt 20, a picking step takes place, wherein the objects to be treated and/or handled are picked up from the conveyor belt 20 (the picking step, wherein the operating element 7 is in the distanced interaction position) so as to be moved along the transfer member 19 towards the guide 2 (the first part of the placing step, wherein the object is maintained solidly joined to the active surface 12 of the operating element 7 in the neared position).

Between the transfer member 19 and the guide 2, therefore, a transfer step takes place (the second part of the placing step), wherein the object to be treated is transferred from the transfer member 19 to the guide 2 when the respective curved sections of the two circuits are facing each other. From an operational viewpoint, the operating element 7 is extended once again in the distanced interaction position along the horizontal direction so that the object constrained to the active surface 12 is above the respective conveyor carriage slidable along the guide 2. In this configuration, the solid connection with the object is interrupted (by means of a specific cam element, or the combined action of the pumping and/or suction member 6 with the valve element and/or the reciprocal variation between the main carriage and the auxiliary carriage slidable along the transfer member 19) so that the latter can be positioned on the respective carriage and moved along the guide 2.

According to one aspect of the invention, as illustrated in figure 2, the machine 1 comprises a control unit 5 connected to the guide 2 and configured to manage the sliding of the main carriage 3 and the auxiliary carriage 4 along the guide 2 and the reciprocal distance thereof.

The control unit 5 is configured to reduce the reciprocal distance between the main carriage 3 and the auxiliary carriage 4 in the event that it is necessary to compress the air towards the object to be treated and/or handled, or it is configured to increase the reciprocal distance between the main carriage 3 and the auxiliary carriage 4 so as to suction the air from the object to be treated and/or handled. In addition, the control unit 5 is configured to keep the reciprocal distance between the main carriage 3 and the auxiliary carriage 4 constant so as to keep the compressed or suctioned air unvaried, i.e. to keep constant the pressure (or negative pressure) of the air emitted or suctioned by the pumping and/or suction member 6.

The control unit 5 is preferably configured to manage the sliding speed of each carriage along the guide 2 and also to manage the speed of relative movement between the carriages during the distancing and reciprocal nearing thereof.

Controlling the relative speed between the carriages is equivalent to controlling the pushing force that one carriage (generally the auxiliary one 4) exerts on the other (generally the main one 3). Consequently, in this manner, the control unit 5 is also capable of managing the pressure inside the container, as it is proportional to the pushing force between the carriages.

In other words, the control unit 5 is configured to control the pushing force of one carriage (generally the auxiliary one 4) on the other (generally the main one 3) through the electric control circuit of the linear motors defined by the stator and by the carriages themselves.

It is preferably possible to connect the control unit 5 to the valve element, if present, so as to vary the configuration thereof between the free condition and the condition of obstruction to the passage of the compressed or suctioned air.

Advantageously, therefore, the control unit 5 is configured to vary the reciprocal distance between the main carriage 3 and the auxiliary carriage 4 and to configure the valve element, if present, accordingly, prior to or simultaneously to any processing that needs to be carried out on the object to be treated and/or handled.

The machine 1 is preferably used to convey containers along a production line in which it is possible to install various operating units 21 capable of carrying out different processes, such as, for example, the labeller illustrated in figure 2.

As regards an example of operation of the machine 1, it derives directly from what was described above and is reiterated here below.

A method for treating and handling objects, in particular containers, carried out by an operator comprises the operating steps of:
- providing a guide 2 extending along the advancement direction A of the objects;
- slidably mounting the main carriage 3 and at least one auxiliary carriage 4 on the guide 2 so that each one defines a respective linear motor;
- interposing an air pumping and/or suction member 6 between the main carriage 3 and the auxiliary carriage 4 so as to compress or suction the air as a function of the variation of the reciprocal distance between the carriages;
- providing an operating element 7 extending from the main carriage 3 towards the object to be treated and/or handled and at least in part arranged in fluid connection with the pumping and/or suction member 6 so as to act on a specific portion of the object to be treated and/or handled through the compression or suction of the air;

After the above-mentioned components have been provided, the operator will be able to:
- move the operating element 7 from the neared position to the distanced interaction position, wherein the active surface 12 of the operating element 7 is arranged at the object to be treated and/or handled so as to act on the latter through the compression or suction of air;
- decrease or increase the reciprocal distance between the main carriage 3 and the auxiliary carriage 4 so as to compress or suction the air towards or from the object to be treated and/or handled.

By varying the distance between the main carriage 3 and the auxiliary carriage 4, the operator will be able to act on the pumping and/or suction member 6 so as to compress or suction a pre-established amount of air. The operating element 7 connected to the pumping and/or suction member 6 is advantageously shaped so as to convey said amount of compressed or suctioned air towards or from the object to be treated and/or handled.

If the operator prepares an operating unit 21 adapted to follow a specific process on the object, the operator can advantageously set the variation of the reciprocal distance between the carriages, and thus the compression or suction of air, so as to take place simultaneously to the process performed on the object by the operating unit 21.

In fact, if the machine 1 comprises a labeller and is used to convey containers, it is advantageous to blow compressed air into them so as to stiffen the structure of the container during processing and prevent the labelling from deforming the structure of the container itself due to the pressure of applying the label.

If the operating element 7 comprises a valve element at the through opening 13 and in the obstruction condition, the operator will advantageously be able to determine a variation of the reciprocal distance between the carriages before the processing takes place, not necessarily during, and even before the operating element 7 is moved into the distanced interaction position. The compressed air is in fact stored in the accumulation area 18 of the operating element 7, which conveys it into the container only when the valve element is configured in the condition that is free to the passage of air following the movement of the operating element 7 into the distanced position of interaction with the object to be treated and/or handled.

Otherwise, the machine 1 can be used to perform functions of the pick-and-place type, wherein the operating element 7 interacts with the object to be treated and/or handled so as to move it in space and into the place of interest.

In fact, the distancing of the main carriage 3 from the auxiliary carriage 4 determines the suction of a pre-established amount of air (as a function of how far the carriages are distanced from each other) by the pumping and/or suction member 6 so as to form a negative pressure between the terminal 11 of the operating element 7 and a specific portion of the object to be treated and/or handled, which are joined together by virtue of a suction cup effect that is established between them. This step, called the picking step, enables the operating element 7 to become bonded with the object to be treated and/or handled so as to be able to form a single body that is movable in space, because controllable by the operator.

Advantageously, if the operating element 7 comprises the valve element at the through opening 13 and in the obstruction condition, the operator will be able to bring about a variation of the reciprocal distance between the carriages for the picking step before the terminal is in contact with the object to be treated and/or handled, and thus before the operating element 7 is moved into the distanced interaction position.

Subsequently, in order to carry out the placing step, i.e. the movement of the object to be treated and/or handled, the latter must remain bonded to the terminal 11 and thus the suction of the pumping and/or suction member 6 must be kept constant. To this end, it is possible that the auxiliary carriage 4 and the main carriage 3, already distanced from each other, maintain their distance so as to keep the established negative pressure constant, or it is possible to ensure that during the entire movement phase the reciprocal distance thereof continues to increase so as to obtain a continuous suction of air.

In this manner, during the placing step the object to be treated and/or handled remains connected to the terminal 11 so as to be moved freely in the operator's space.

Preferably, when during the placing step the carriages maintain the reciprocal distance thereof unvaried and hence the pumping and/or suction member 6 keep the negative pressure formed constant so as to induce the "suction cup effect", the terminal 11 is shaped so as to abut in a substantially hermetic manner to the portion of the object to be treated and/or handled or, alternatively, at the through opening 13 of the active surface 12 it has a seal that keeps out any amounts of air such as to reduce the "suction cup effect".

## Claims

1. A machine (1) for treating and/or handling objects, in particular containers, comprising:
- a guide (2) extending along an advancement direction (A) of the objects;
- a main carriage (3) slidably mounted on said guide (2) so as to define together a main linear motor;
- at least one auxiliary carriage (4) slidably mounted on said guide (2) so as to define together an auxiliary linear motor;
- a control unit (5) connected to said guide (2) and configured to manage the sliding of said main carriage (3) and said auxiliary carriage (4) along said guide (2) and the reciprocal distance thereof;
**characterised in that** it comprises:
- a pumping and/or suction member (6) for pumping and/or suctioning a fluid interposed between said main carriage (3) and said auxiliary carriage (4) so as to compress or suction said fluid as a function of the variation of the reciprocal distance between said main carriage (3) and said auxiliary carriage (4);
- an operating element (7) extending from the main carriage (3) towards the object to be treated and/or handled and at least in part arranged in fluid connection with said pumping and/or suction member (6) so as to act on a specific portion of said object to be treated and/or handled through said compressed or suctioned fluid
; said operating element (7) having an active surface (12) shaped to be able to interact with the specific portion of the object to be treated and/or handled, in particular a mouth of the container; said active surface (12) having a through opening (13) facing towards the object to be treated and/or handled so as to define a fluid connection between said pumping and/or suction member (6) and the object to be treated and/or handled.

2. The machine (1) according to claim 1, wherein said operating element (7) is associated with said main carriage (3) and is movable between a distanced interaction position, wherein the active surface (12) is arranged at a distance from the main carriage (3) and at the object to be treated and/or handled so as to act on the latter through said compressed or suctioned fluid, and a neared position, wherein the active surface (12) is arranged near to the main carriage (3) with respect to said distanced interaction position.

3. The machine (1) according to claim 2, wherein said active surface (12) is counter-shaped with respect to the mouth of the container to convey said fluid compressed by said pumping and/or suction member (6) into the container when said operating element (7) is abutted in the distanced interaction position.

4. The machine (1) according to claim 2, wherein said active surface (12) is shaped to be abutted against the portion of the object to be treated and/or handled; the pumping and/or suction member (6) being configured to keep said fluid suctioned also following the passage from the distanced interaction position to the neared one.

5. The machine (1) according to any one of the preceding claims, wherein said operating element (7) comprises a valve element arranged at said through opening (13) and that can be configured between a condition that is free to the passage of said fluid and a condition that obstructs the passage of said fluid as a function of the presence of interaction between said active surface (12) and the specific portion of the object.

6. The machine (1) according to claim 5, wherein said operating element (7) comprises an accumulation area (18) for said fluid compressed or suctioned by said pumping and/or suction member (6) so as to contain said compressed or suctioned fluid when said valve element is configured in the condition that obstructs the passage of said fluid.

7. The machine (1) according to any one of the preceding claims, wherein said pumping and/or suction member (6) comprises a cylinder (8) and a piston (9) slidably inserted in said cylinder (8) as a function of the variation of the reciprocal distance between said main carriage (3) and said auxiliary carriage (4); said cylinder (8) being connected to said main carriage (3) and said piston (9) being connected to said auxiliary carriage (4).

8. The machine (1) according to any one of the preceding claims, wherein said control unit (5) is configured to reduce the reciprocal distance between said main carriage (3) and said auxiliary carriage (4) so as to compress said fluid towards the object to be treated and/or handled or to increase the reciprocal distance between said main carriage (3) and said auxiliary carriage (4) so as to suction said fluid from the object to be treated and/or handled or to keep the reciprocal distance constant between said main carriage (3) and said auxiliary carriage (4) so as to keep said compressed or suctioned fluid unvaried.

9. The machine (1) according to any one of the preceding claims, comprising at least one operating unit (21) adapted to perform a specific process on the object; said control unit (5) being configured to reduce/increase the reciprocal distance between said main carriage (3) and said auxiliary carriage (4) prior to or simultaneously to the processing performed by said operating unit (21) on the object to be treated and/or handled.

10. A method for treating and/or handling objects, in particular containers, comprising the operating steps of:
- providing a guide (2) extending along an advancement direction (A) of the objects;
- slidably mounting a main carriage (3) and at least one auxiliary carriage (4) on said guide (2) so that each one defines a respective linear motor; **characterised in that** it further comprises the operating steps of:
- interposing a pumping and/or suction member (6) for pumping and/or suctioning a fluid between said main carriage (3) and said auxiliary carriage (4) so as to compress or suction said fluid as a function of the variation of the reciprocal distance between said main carriage (3) and said auxiliary carriage (4);
- providing an operating element (7) extending from the main carriage (3) towards the object to be treated and/or handled and at least in part arranged in fluid connection with said pumping and/or suction member (6) so as to act on a specific portion of said object to be treated and/or handled through said compressed or suctioned fluid; said operating element (7) having an active surface (12) shaped to interact with the specific portion of the object to be treated and/or handled, in particular a mouth of the container; said active surface (12) having a through opening (13) facing towards the object to be treated and/or handled so as to define a fluid connection between said pumping and/or suction member (6) and the object to be treated and/or handled;
- moving said operating element (7) from a neared position to a distanced interaction position, wherein an active surface (12) of the operating element (7) shaped to interact with the specific portion of the object to be treated and/or handled is arranged at a distance from the main carriage and at the object to be treated and/or handled so as to act on the latter through said compressed or suctioned fluid;
- reducing or increasing the reciprocal distance between said main carriage (3) and said auxiliary carriage (4) to compress or suction said fluid towards or from the object to be treated and/or handled.

11. The method according to claim 10, comprising the further steps of:
- providing an operating unit (21) adapted to perform a specific process on the object;
- performing the process on the object simultaneously to said step of reducing or increasing the reciprocal distance between said main carriage (3) and said auxiliary carriage (4).

12. The method according to claim 10, comprising the further steps of:
- associating a valve element with said operating element (7); said valve element being able to be configured between a condition that is free to the passage of said fluid and a condition that obstructs the passage of said fluid;
- setting said valve element in said obstruction condition that obstructs the passage of said fluid;
- performing the step of reducing or increasing the reciprocal distance between said main carriage (3) and said auxiliary carriage (4) before acting on the object to be treated and/or handled;
- setting said valve element in said condition that is free to the passage of said fluid at the time in which an action takes place on the object.

13. The method according to claim 10, comprising the further step of keeping said fluid suctioned also following the passage from the distanced interaction position to the neared position so as to move the object to be treated and/or handled in space.

14. The method according to claim 13, wherein the object to be treated and/or handled is moved between the distanced interaction position and the neared position along a vertical direction or a horizontal direction or a combination between the vertical and horizontal direction.

15. The method according to claim 14, wherein the object to be treated and/or handled is moved along said one horizontal direction with a variable stroke according to requirements.

## Patentansprüche

1. Maschine (1) zur Behandlung und/oder Handhabung von Objekten, insbesondere von Behältern, umfassend:
- eine Führung (2), die sich entlang einer Vorschubrichtung (A) der Objekte erstreckt;
- einen Hauptwagen (3), der verschiebbar auf der Führung (2) montiert ist, sodass diese gemeinsam einen Hauptlinearmotor definieren;
- mindestens einen Hilfswagen (4), der verschiebbar auf der Führung (2) montiert ist, sodass diese gemeinsam einen Hilfslinearmotor definieren;
- eine Steuereinheit (5), die mit der Führung (2) verbunden und ausgelegt ist, um das Verschieben des Hauptwagens (3) und des Hilfswagens (4) entlang der Führung (2) und den gegenseitigen Abstand davon zu steuern,
**dadurch gekennzeichnet, dass** sie Folgendes umfasst:
- ein Pump- und/oder Saugelement (6) zum Pumpen und/oder Ansaugen eines Mediums, das zwischen dem Hauptwagen (3) und dem Hilfswagen (4) eingesetzt ist, sodass das Medium abhängig von der Veränderung des gegenseitigen Abstands zwischen dem Hauptwagen (3) und dem Hilfswagen (4) komprimiert oder angesaugt wird;
- ein Betriebselement (7), das sich vom Hauptwagen (3) hinführend zum zu behandelnden und/oder zu handhabenden Objekt erstreckt und mindestens teilweise in Fluidverbindung mit dem Pump- und/oder Saugelement (6) angeordnet ist, sodass es auf einen spezifischen Abschnitt des durch das komprimierte oder angesaugte Medium zu behandelnde und/oder zu handhabende Objekt wirkt,
wobei das Betriebselement (7) eine aktive Oberfläche (12) aufweist, die ausgeformt ist, um in der Lage zu sein, mit dem spezifischen Abschnitt des zu behandelnden und/oder zu handhabenden Objekts zu interagieren, insbesondere einem Mund des Behälters, wobei die aktive Oberfläche (12) eine Durchführungsöffnung (13) aufweist, die dem zu behandelnden und/oder zu handhabenden Objekt zugewandt ist, sodass eine Fluidverbindung zwischen dem Pump- und/oder Saugelement (6) und dem zu behandelnden und/oder zu handhabenden Objekt definiert wird.

2. Maschine (1) nach Anspruch 1, wobei das Betriebselement (7) mit dem Hauptwagen (3) assoziiert und zwischen einer beabstandeten Interaktionsposition, in der die aktive Oberfläche (12) in einem Abstand vom Hauptwagen (3) und am zu behandelnden und/oder zu handhabenden Objekt angeordnet ist, sodass sie durch das komprimierte oder angesaugte Medium auf Letzteres wirkt, und einer angenäherten Position, in der die aktive Oberfläche (12) in der Nähe des Hauptwagens (3) in Bezug auf die beabstandete Interaktionsposition angeordnet ist, bewegbar ist.

3. Maschine (1) nach Anspruch 2, wobei die aktive Oberfläche (12) gegenständig passend zum Mund des Behälters ausgeformt ist, um das komprimierte Medium durch das Pump- und/oder Saugelement (6) in den Behälter zu leiten, wenn das Betriebselement (7) in der beabstandeten Interaktionsposition anschlägt.

4. Maschine (1) nach Anspruch 2, wobei die aktive Oberfläche (12) ausgeformt ist, um an den Abschnitt des zu behandelnden und/oder zu handhabenden Objekts anzuschlagen, und das Pump- und/oder Saugelement (6) ausgelegt ist, um dafür zu sorgen, dass das Medium auch nach dem Wechsel von der beabstandeten Interaktionsposition in die angenäherte Position weiterhin angesaugt wird.

5. Maschine (1) nach einem der vorhergehenden Ansprüche, wobei das Betriebselement (7) ein Ventilelement umfasst, das an der Durchführungsöffnung (13) angeordnet ist und zwischen einem Zustand, der frei für das Durchströmen des Mediums ist, und einem Zustand, der das Durchströmen des Mediums abhängig von der Interaktion zwischen der aktiven Oberfläche (12) und dem spezifischen Abschnitt des Objekts versperrt, ausgelegt sein kann.

6. Maschine (1) nach Anspruch 5, wobei das Betriebselement (7) einen Akkumulationsbereich (18) für das Medium umfasst, das vom Pump- und/oder Saugelement (6) komprimiert oder angesaugt wird, sodass es das komprimierte oder angesaugte Medium enthält, wenn das Ventilelement in dem Zustand ausgelegt ist, der das Durchströmen des Mediums versperrt.

7. Maschine (1) nach einem der vorhergehenden Ansprüche, wobei das Pump- und/oder Saugelement (6) einen Zylinder (8) und einen Kolben (9) umfasst, der verschiebbar in den Zylinder (8) abhängig von der Veränderung des gegenseitigen Abstands zwischen dem Hauptwagen (3) und dem Hilfswagen (4) eingefügt ist, wobei der Zylinder (8) mit dem Hauptwagen (3) verbunden ist und der Kolben (9) mit dem Hilfswagen (4) verbunden ist.

8. Maschine (1) nach einem der vorhergehenden Ansprüche, wobei die Steuereinheit (5) ausgelegt ist, um den gegenseitigen Abstand zwischen dem Hauptwagen (3) und dem Hilfswagen (4) zu reduzieren, sodass das Medium hinführend zum zu behandelnden und/oder zu handhabenden Objekt komprimiert wird, oder um den gegenseitigen Abstand zwischen dem Hauptwagen (3) und dem Hilfswagen (4) zu erhöhen, sodass das Medium vom zu behandelnden und/oder zu handhabenden Objekt angesaugt wird, oder um den gegenseitigen Abstand zwischen dem Hauptwagen (3) und dem Hilfswagen (4) konstant zu halten, sodass das komprimierte oder angesaugte Medium unverändert bleibt.

9. Maschine (1) nach einem der vorhergehenden Ansprüche, umfassend mindestens eine Betriebseinheit (21), die dazu geeignet ist, einen spezifischen Prozess auf dem Objekt auszuführen, wobei die Steuereinheit (5) ausgelegt ist, um den gegenseitigen Abstand zwischen dem Hauptwagen (3) und dem Hilfswagen (4) vor der von der Betriebseinheit (21) auf dem zu behandelnden und/oder zu handhabenden Objekt durchgeführten Bearbeitung oder gleichzeitig damit zu reduzieren/zu erhöhen.

10. Verfahren zur Behandlung und/oder Handhabung von Objekten, insbesondere von Behältern, umfassend die folgenden Schritte:
- Bereitstellen einer Führung (2), die sich entlang einer Vorschubrichtung (A) der Objekte erstreckt;
- verschiebbares Montieren eines Hauptwagens (3) und mindestens eines Hilfswagens (4) auf der Führung (2), sodass ein jeder einen jeweiligen linearen Motor definiert, **dadurch gekennzeichnet, dass** es zudem die folgenden Betriebsschritte umfasst:
- Einsetzen eines Pump- und/oder Saugelements (6) zum Pumpen und/oder Ansaugen eines Mediums zwischen dem Hauptwagen (3) und dem Hilfswagen (4), sodass das Medium abhängig von der Veränderung des gegenseitigen Abstands zwischen dem Hauptwagen (3) und dem Hilfswagen (4) komprimiert oder angesaugt wird;
- Bereitstellen eines Betriebselements (7), das sich vom Hauptwagen (3) hinführend zum zu behandelnden und/oder zu handhabenden Objekt erstreckt und mindestens teilweise in Fluidverbindung mit dem Pump- und/oder Saugelement (6) angeordnet ist, sodass es auf einen spezifischen Abschnitt des durch das komprimierte oder angesaugte Medium zu behandelnde und/oder zu handhabende Objekt wirkt, wobei das Betriebselement (7) eine aktive Oberfläche (12) aufweist, die ausgeformt ist, um mit dem spezifischen Abschnitt des zu behandelnden und/oder zu handhabenden Objekts zu interagieren, insbesondere einem Mund des Behälters, wobei die aktive Oberfläche (12) eine Durchführungsöffnung (13) aufweist, die dem zu behandelnden und/oder zu handhabenden Objekt zugewandt ist, sodass eine Fluidverbindung zwischen dem Pump- und/oder Saugelement (6) und dem zu behandelnden und/oder handzuhabenden Objekt definiert wird;
- Bewegen des Betriebselements (7) von einer angenäherten Position in eine beabstandete Interaktionsposition, wobei eine aktive Oberfläche (12) des Betriebselements (7), die ausgeformt ist, um mit dem spezifischen Abschnitt des zu behandelnden und/oder zu handhabenden Objekts zu interagieren, in einem Abstand vom Hauptwagen und am zu behandelnden und/oder zu handhabenden Objekt angeordnet ist, sodass sie durch das komprimierte oder angesaugte Medium auf Letzteres wirkt;
- Reduzieren oder Erhöhen des gegenseitigen Abstands zwischen dem Hauptwagen (3) und dem Hilfswagen (4), um Medium hinführend zum oder wegführend vom zu behandelnden und/oder zu handhabenden Objekt zu komprimieren oder anzusaugen.

11. Verfahren nach Anspruch 10, umfassend die folgenden weiteren Schritte:
- Bereitstellen einer Betriebseinheit (21), die dazu geeignet ist, einen spezifischen Prozess auf dem Objekt auszuführen;
- Durchführen des Prozesses auf dem Objekt gleichzeitig mit dem Schritt zum Reduzieren oder Erhöhen des gegenseitigen Abstands zwischen dem Hauptwagen (3) und dem Hilfswagen (4).

12. Verfahren nach Anspruch 10, umfassend die folgenden weiteren Schritte:
- Assoziieren eines Ventilelements mit dem Betriebselement (7), wobei das Ventilelement in der Lage ist, zwischen einem Zustand, der frei für das Durchströmen des Mediums ist, und einem Zustand, der das Durchströmen des Mediums versperrt, ausgelegt zu werden;
- Versetzen des Ventilelements in den Versperrzustand, der das Durchströmen des Mediums versperrt;
- Durchführen des Schritts zum Reduzieren oder Erhöhen des gegenseitigen Abstands zwischen dem Hauptwagen (3) und dem Hilfswagen (4), bevor auf das zu behandelnde und/oder zu handhabende Objekt eingewirkt wird;
- Versetzen des Ventilelements in den Zustand, der frei für das Durchströmen des Mediums ist, zu dem Zeitpunkt, an dem die Einwirkung auf das Objekt stattfindet.

13. Verfahren nach Anspruch 10, umfassend den weiteren Schritt, bei dem das Medium auch nach dem Wechsel von der beabstandeten Interaktionsposition in die angenäherte Position angesaugt wird, sodass das zu behandelnde und/oder zu handhabende Objekt räumlich bewegt wird.

14. Verfahren nach Anspruch 13, wobei das zu behandelnde und/oder zu handhabende Objekt zwischen der beabstandeten Interaktionsposition und der angenäherten Position entlang einer vertikalen Richtung oder einer horizontalen Richtung oder einer Kombination der vertikalen und horizontalen Richtung bewegt wird.

15. Verfahren nach Anspruch 14, wobei das zu behandelnde und/oder zu handhabende Objekt entlang einer horizontalen Richtung je nach Anforderungen mit einem variablen Hub bewegt wird.

## Revendications

1. Machine (1) de traitement et/ou de manipulation d'objets, en particulier de contenants, comprenant :
- un guide (2) s'étendant le long d'une direction d'avancement (A) des objets ;
- un chariot principal (3) monté de manière coulissante, sur ledit guide (2) de manière à définir ensemble un moteur linéaire principal ;
- au moins un chariot auxiliaire (4) monté de manière coulissante sur ledit guide (2) de manière à définir ensemble un moteur linéaire auxiliaire ;
- une unité de commande (5) reliée audit guide (2) et configurée pour gérer le coulissement dudit chariot principal (3) et dudit chariot auxiliaire (4) le long dudit guide (2) et leur distance réciproque ;
**caractérisée en ce qu'**elle comprend :
- un organe de pompage et/ou d'aspiration (6) pour pomper et/ou aspirer un fluide interposé entre ledit chariot principal (3) et ledit chariot auxiliaire (4) de manière à comprimer ou aspirer ledit fluide en fonction de la variation de la distance réciproque entre ledit chariot principal (3) et ledit chariot auxiliaire (4) ;
- un élément d'actionnement (7) s'étendant du chariot principal (3) vers l'objet à traiter et/ou à manipuler et au moins en partie agencé en connexion fluidique avec ledit organe de pompage et/ou d'aspiration (6) de manière à agir sur une portion spécifique dudit objet à traiter et/ou à manipuler à travers ledit fluide comprimé ou aspiré ;
ledit élément de fonctionnement (7) ayant une surface active (12) formée pour pouvoir interagir avec la portion spécifique de l'objet à traiter et/ou à manipuler, en particulier une embouchure du contenant et; ladite surface active (12) ayant une ouverture traversante (13) tournée vers l'objet à traiter et/ou à manipuler de manière à définir une connexion fluidique entre ledit organe de pompage et/ou d'aspiration (6) et l'objet à traiter et/ou à manipuler.

2. Machine (1) selon la revendication 1, dans laquelle ledit élément de fonctionnement (7) est associé audit chariot principal (3) et est mobile entre une position d'interaction espacée, où la surface active (12) est agencée à une certaine distance du chariot principal (3) et au niveau de l'objet à traiter et/ou à manipuler de manière à agir sur ce dernier à travers ledit fluide comprimé ou aspiré, et une position rapprochée, où la surface active (12) est agencée à proximité du chariot principal (3) par rapport à ladite position d'interaction espacée.

3. Machine (1) selon la revendication 2, dans laquelle ladite surface active (12) est contre-formée par rapport à l'embouchure du contenant pour transporter ledit fluide comprimé par ledit organe de pompage et/ou d'aspiration (6) dans le contenant lorsque ledit élément de fonctionnement (7) est en butée dans la position d'interaction éloignée.

4. Machine (1) selon la revendication 2, dans laquelle ladite surface active (12) est formée pour être en butée contre la portion de l'objet à traiter et/ou à manipuler ; l'organe de pompage et/ou d'aspiration (6) étant configuré pour maintenir ledit fluide aspiré également après le passage de la position d'interaction éloignée à la position rapprochée.

5. Machine (1) selon l'une quelconque des revendications précédentes, dans laquelle ledit élément de fonctionnement (7) comprend un élément de soupape agencé au niveau de ladite ouverture traversante (13) et qui peut être configuré entre une condition qui est libre au passage dudit fluide et une condition qui obstrue le passage dudit fluide en fonction de la présence d'une interaction entre ladite surface active (12) et la portion spécifique de l'objet.

6. Machine (1) selon la revendication 5, dans laquelle ledit élément de fonctionnement (7) comprend une zone d'accumulation (18) pour ledit fluide comprimé ou aspiré par ledit organe de pompage et/ou d'aspiration (6) de manière à contenir ledit fluide comprimé ou aspiré lorsque ledit élément de soupape est configuré dans la condition qui obstrue le passage dudit fluide.

7. Machine (1) selon l'une quelconque des revendications précédentes, dans laquelle ledit organe de pompage et/ou d'aspiration (6) comprend un cylindre (8) et un piston (9) inséré de manière coulissante dans ledit cylindre (8) en fonction de la variation de la distance réciproque entre ledit chariot principal (3) et ledit chariot auxiliaire (4) ; ledit cylindre (8) étant relié audit chariot principal (3) et ledit piston (9) étant relié audit chariot auxiliaire (4).

8. Machine (1) selon l'une quelconque des revendications précédentes, dans laquelle ladite unité de commande (5) est configurée pour réduire la distance réciproque entre ledit chariot principal (3) et ledit chariot auxiliaire (4) de manière à comprimer ledit fluide vers l'objet à traiter et/ou à manipuler ou pour augmenter la distance réciproque entre ledit chariot principal (3) et ledit chariot auxiliaire (4) de manière à aspirer ledit fluide de l'objet à traiter et/ou à manipuler ou pour maintenir la distance réciproque constante entre ledit chariot principal (3) et ledit chariot auxiliaire (4) de manière à maintenir ledit fluide comprimé ou aspiré inchangé.

9. Machine (1) selon l'une quelconque des revendications précédentes, comprenant au moins une unité de fonctionnement (21) adaptée pour effectuer un processus spécifique sur l'objet ; ladite unité de commande (5) étant configurée pour réduire/augmenter la distance réciproque entre ledit chariot principal (3) et ledit chariot auxiliaire (4) avant ou simultanément au traitement effectué par ladite unité de fonctionnement (21) sur l'objet à traiter et/ou à manipuler.

10. Procédé de traitement et/ou de manipulation d'objets, en particulier de contenants, comprenant les étapes de fonctionnement de :
- fournir un guide (2) s'étendant le long d'une direction d'avancement (A) des objets ;
- monter de manière coulissante un chariot principal (3) et au moins un chariot auxiliaire (4) sur ledit guide (2) de sorte que chacun définit un moteur linéaire respectif ; **caractérisé en ce qu'**il comprend en outre les étapes de fonctionnement de :
- interposer un organe de pompage et/ou d'aspiration (6) pour pomper et/ou aspirer un fluide entre ledit chariot principal (3) et ledit chariot auxiliaire (4) de manière à comprimer ou aspirer ledit fluide en fonction de la variation de la distance réciproque entre ledit chariot principal (3) et ledit chariot auxiliaire (4) ;
- fournir un élément de fonctionnement (7) s'étendant du chariot principal (3) vers l'objet à traiter et/ou à manipuler et au moins en partie agencé en connexion fluidique avec ledit organe de pompage et/ou d'aspiration (6) de manière à agir sur une portion spécifique dudit objet à traiter et/ou à manipuler à travers ledit fluide comprimé ou aspiré ; ledit élément de fonctionnement (7) ayant une surface active (12) formée pour interagir avec la portion spécifique de l'objet à traiter et/ou à manipuler, en particulier une embouchure du contenant ; ladite surface active (12) ayant une ouverture traversante (13) orientée vers l'objet à traiter et/ou à manipuler de manière à définir une connexion fluidique entre ledit organe de pompage et/ou d'aspiration (6) et l'objet à traiter et/ou à manipuler ;
- déplacer ledit élément de fonctionnement (7) d'une position rapprochée à une position d'interaction éloignée, dans laquelle une surface active (12) de l'élément de commande (7) formée pour interagir avec la portion spécifique de l'objet à traiter et/ou à manipuler est agencée à distance du chariot principal et au niveau de l'objet à traiter et/ou à manipuler de manière à agir sur ce dernier à travers ledit fluide comprimé ou aspiré ;
- réduire ou augmenter la distance réciproque entre ledit chariot principal (3) et ledit chariot auxiliaire (4) pour comprimer ou aspirer ledit fluide vers ou depuis l'objet à traiter et/ou à manipuler.

11. Procédé selon la revendication 10, comprenant les étapes supplémentaires de :
- fournir une unité de fonctionnement (21) adaptée pour effectuer un processus spécifique sur l'objet ;
- effectuer le processus sur l'objet simultanément à ladite étape consistant à réduire ou augmenter la distance réciproque entre ledit chariot principal (3) et ledit chariot auxiliaire (4).

12. Procédé selon la revendication 10, comprenant les étapes supplémentaires de :
- associer un élément de soupape audit élément de fonctionnement (7) ; ledit élément de soupape pouvant être configuré entre une condition qui est libre au passage dudit fluide et une condition qui obstrue le passage dudit fluide ;
- mettre ledit élément de soupape dans ladite condition d'obstruction qui obstrue le passage dudit fluide ;
- réaliser l'étape consistant à réduire ou augmenter la distance réciproque entre ledit chariot principal (3) et ledit chariot auxiliaire (4) avant d'agir sur l'objet à traiter et/ou à manipuler ;
- mettre ledit élément de soupape dans ladite condition qui est libre au passage dudit fluide au moment où une action a lieu sur l'objet.

13. Procédé selon la revendication 10, comprenant l'étape supplémentaire consistant à maintenir ledit fluide aspiré également après le passage de la position d'interaction éloignée à la position rapprochée de manière à déplacer l'objet à traiter et/ou à manipuler dans l'espace.

14. Procédé selon la revendication 13, dans lequel l'objet à traiter et/ou à manipuler est déplacé entre la position d'interaction éloignée et la position rapprochée le long d'une direction verticale ou d'une direction horizontale ou d'une combinaison entre la direction verticale et la direction horizontale.

15. Procédé selon la revendication 14, dans lequel l'objet à traiter et/ou à manipuler est déplacé le long de ladite une direction horizontale avec une course variable selon les exigences.
